# EUROPÄISCHE PATENTANMELDUNG

(11) **EP 0 727 267 A1**
(43) Veröffentlichungstag der Anmeldung: **21.08.1996**
(21) Anmeldenummer: 95101982.7
(22) Anmeldetag: 14.02.1995
(51) Int. Cl.: B22D 11/126, B66C 1/28, B23K 37/02, B23K 37/04

(54) **Verfahren und Einrichtung zum Erzeugen von Mehrfachsträngen in einer Stahlstranggiessanlage**

(71) Anmelder: Horst K. Lotz Feuerschutzbaustoffe, D-65719 Hofheim-Wallau (DE)
(72) Erfinder: Lotz, Horst K., D-65719 Hofheim-Wallau (DE)

(57) **Zusammenfassung**

Mit Hilfe von Hubschneidwagen können Strangstücke direkt nach einer Querteilanlage störungssicher und zeitverlustfrei in einer Ebene über dem Abtransportrollgang, der aus Sicherheitsgründen verfügbar bleibt, mit etwa Gießgeschwindigkeit längsgeteilt werden.

## Beschreibung

Die wirtschaftliche Nutzung einer Stahlstranggießanlage verlangt nicht nur höchste Gießgeschwindigkeiten, sondern auch das Gießen der durch die Gießanlage breitest möglichen Stränge. Oft jedoch werden Strangstücke (1) bzw. Brammen (1) von geringerer Breite gebraucht, wozu die Anlage zeitraubend umgestellt werden müssen und verschiedene Gießkokillen verfügbar sein müssen. Daher wandte sich die Aufmerksamkeit schon sehr früh einem Längsteilen durch Brennschneidmaschinen mit Sauerstoff (oder Plasma- bzw. Laserschneiden oder Längsscheren) zu, das möglichst früh nach dem Austreten des Stranges aus den Ausziehrollen der Stranggießanlage erfolgen sollte.

Bis heute erlaubt nur das Loxjet®-Verfahren (DE 3827417 C1) ein Brennschneiden mit flüssigem Sauerstoffstrahl Schneidgeschwindigkeiten, die im Bereich der Gießgeschwindigkeiten liegen. Dieses Verfahren ist aber sehr empfindlich gegen ungleichmäßige und ruckende Bewegungen von Schneidbrenner oder Strang, z. B. durch Strangoszillation aus dem Gießverfahren, beim Überlaufen von Rollgangsrollen und allen anderen denkbaren Bewegungseinflüssen auf Strang oder die Brennschneideinrichtung, die die Relativbewegung zwischen Strang und Brenner ungleichmäßig gestalten. Natürlich ist das Anschneiden mit dem Loxjet®-Verfahren genau wie beim normalen Brennschneiden mit geringerer als der möglichen Schneidgeschwindigkeit zu beginnen und mit sicherer Beschleunigung auf die volle Schneidgeschwindigkeit zur richtigen Ausgestaltung des Brennverfahrens zu erhöhen.

Der aus den Ausziehrollen austretende Strang muß erst von einem vorweglaufenden Kalt-Anfahrstrang getrennt werden und hat danach ein kaltes und materialmäßig unhomogenes Schopfende, das in der nachfolgenden Querteiltrenneinrichtung abgetrennt wird. Dadurch entsteht ein Brennbart an der Schnittunterkante, der nun auch noch mechanisch entfernt , d.h. abgeschlagen wird. Danach könnte ein sicheres Längsteilen beginnen. Dazu ist ein Rollgangstransport (Bewegungsunregelmäßigkeiten) oder ein Transport durch Treibrollen vor und hinter einer nachfolgenden Längstrenneinrichtung (15) vorzusehen.

Die möglichen, ein Schneiden unterbrechende Schwierigkeiten beim Längsteilen direkt im Materialfluß an einer Stelle hinter der Querteil- und Entbartungseinrichtung sind:
1. Oszillationsbewegungen verschiedener Größen und Beschleunigungen, wenn das Längstrennen am noch nicht unterteilten Strang erfolgt.
2. Unerwünschte Bewegungen auf Strang oder Strangstücke (1) durch:
   - Überlaufen von Rollen in der Querteilstrecke
   - Heben- und Senken von Transportrollen in der Querteilstrecke
   - Anklemmen bzw. Aufsetzen einer Querteileinrichtung
   - Beschleunigten Abstransport eines gerade abgetrennten Strangstückes (1) zur Vermeidung des Anklebens an den weiterlaufenden Strang
   - Zusammenstoßen von Strang und Strangstück (1), z.B. durch langsameres Anschneiden beim Längstrennen
   - Überlauf von Transportrollen mit dem Querbart
   - Schlag- oder stoßartiges Entfernen des Querbarts
   - Ein- oder Auslauf in oder aus einem Treibrollenpaar vor und hinter der Längsteileinrichtung
   - Überlauf der durch Wärmeverzug nicht geometrisch richtigen Strangstückform über nachfolgende Transportrollen (mit und ohne Schneidbärte)
   - Mechanische Entfernung des Längsbarts
   - Schlechten Gleichlauf und Drehschwingungen der Treibrollenantriebe
   - Veränderung der seitlichen Lage beim Trenndurchlauf
   - Vibrationen und Stöße durch einen der Längstrenneinrichtung (15) benachbarten Ursprung (z.B. Krantransport)
   - Einlaufstoß in das zweite Treibrollenpaar
   - Auslauf aus dem ersten Treibrollenpaar
   - Ruckendes Rutschen der Bramme (1) in den Treibrollen durch Schrumpfung

Die nachfolgend beschriebene Erfindung beansprucht ein betriebssicheres Verfahren mit Einrichtungen zum Längssteilen eines Stranges, besser von Strangstücken (1) bzw. Brammen im Fluß nach dem Abtrennen des Schopfendes oder dem regelmäßigen Querteilen mit einer Querteileinrichtung und nach dem Entfernen des beim Querteilen entstandenen Querbarts darzustellen, ohne durch die vorstehenden Einflüsse gestört zu werden.

Ähnlich wie in der EPA 92105945.7 beschrieben, wird die Bramme (1) mittels gleichlaufendem Wagen vor und hinter dem Schwerpunkt der Bramme (1) zur und durch eine Längstrenneinrichtung (15) vorzugsweise mit einem Sauerstoffschneidbrenner trennend getragen und danach auf dem nachfolgenden Rollgang (2) abgelegt.

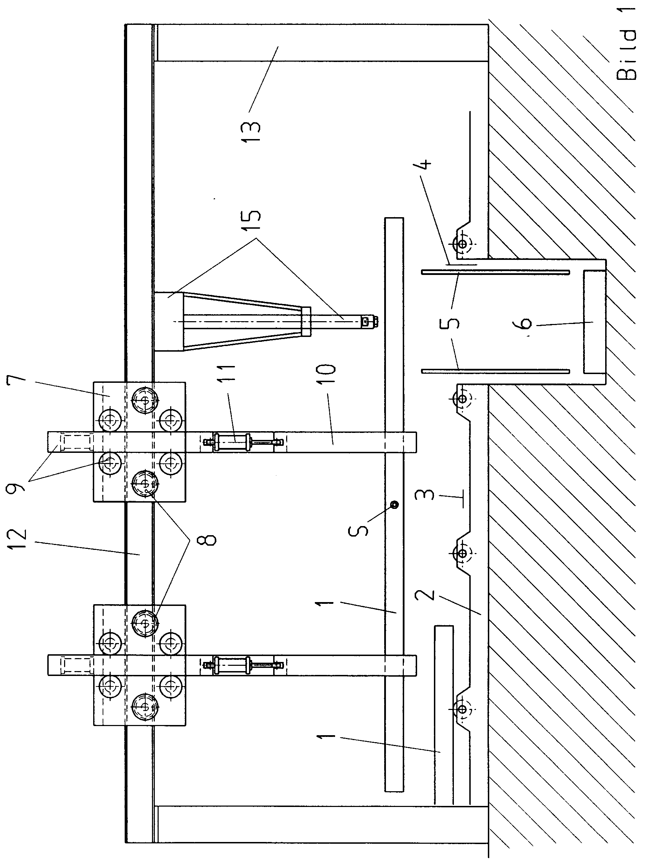

Wie in **Bild 1** erfindungsgemäß dargestellt, ist aber über einem durchgehenden Rollgang (2) eine auf Laufbahnstützen (13) ruhende Laufbahn (12) angeordnet, an der mindestens 2 Hubschneidwagen (7) mit Eillauf-, Anschneid- und Schneidgeschwindigkeit verfahren können, die zuerst eine Bramme (1) mit Zangen (10) ergreifen, hochheben und im Gleichlauf durch die Längstrenneinrichtung (15) tragen. Nach dem Längsteilen werden die erzeugten Streifen der Bramme (1) auf den Rollgang (12) zum Abtransport aufgelegt, die Hubschneidwagen (7) laufen zurück, um die nächste Bramme (1) aufzunehmen. Die Längstrenneinrichtung (15) selbst ist unter der Laufbahn (12) angebracht und wird mit Leitungen durch das Innere der Laufbahn (12), in diesem Beispiel als zwei nebeneinander liegende Doppel-T-Träger dargestellt, versorgt und gesteuert. Unterhalb der Längstrenneinrichtung (15) sind in einer Rollgangslücke (4) Schutzwände (5) gegen die Schneidschlackenspritzer und ein Schlackenkübel (6) untergebracht. Man braucht nur die Schutzwände (5) herauszuziehen, dann können normal breite Brammen (1) über den Rollgang (2) ohne Längsteilen durchgefördert werden.

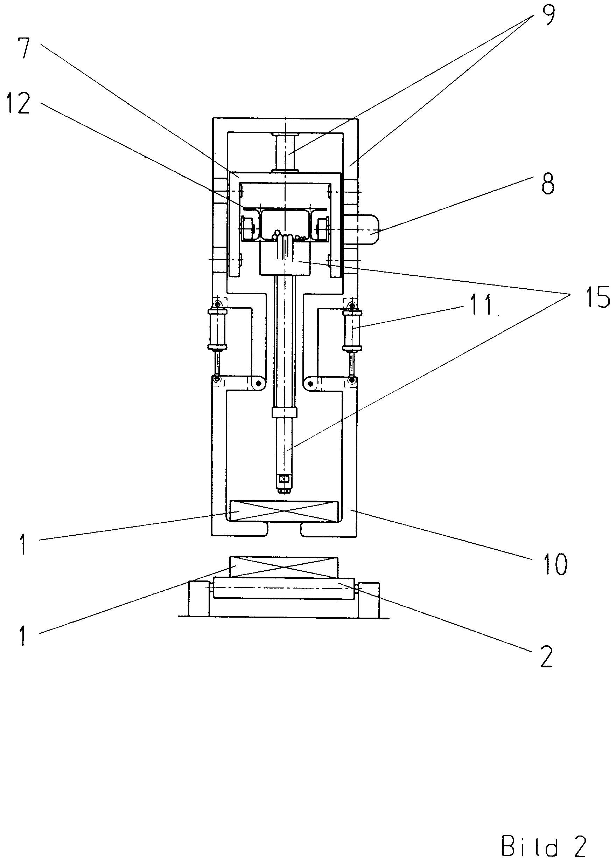

**Bild 2** zeigt die erfindungsgemäße Ausführung der Laufbahn (12) im Querschnitt mit einem sie umschließenden Hubschneidwagen (7), der auch die Längstrenneinrichtung (15) umschließt, d.h. beim Längsteilen die Bramme (1) unter derselben durchtragen kann. Dabei umschließt der Hubschneidwagen (7) mit seinem Verfahrantrieb (8) und seinem Hubantrieb (9) und seinen Zangen (10), die mit den Zangenantrieben (11) geöffnet und geschlossen werden können, sowohl die Laufbahn (12) als auch die Längstrenneinrichtung (15). Bei dieser Ausführung genügen 2 bis 3 Hubschneidwagen (7) für den gesamten Transport- und Trennablauf. Allerdings muß dabei die Gießgeschwindigkeit der Stranggießanlage langsamer sein als die anwendbare Schneidgeschwindigkeit, weil nach dem Trennen einer Bramme (1) noch ein Ablegen, ein Zurückfahren und ein Anheben der nächsten Bramme (1) vor dem nächsten Trennvorgang entsprechende Zeitspannen benötigen.

Im Falle einer hohen Gießgeschwindigkeit der Stranggießanlage bzw. geringer Trenngeschwindigkeit ist erfindungsgemäß folgende Ausführung möglich, um die Produktionsleistung der gesamten Anlage möglichst hoch zu halten.

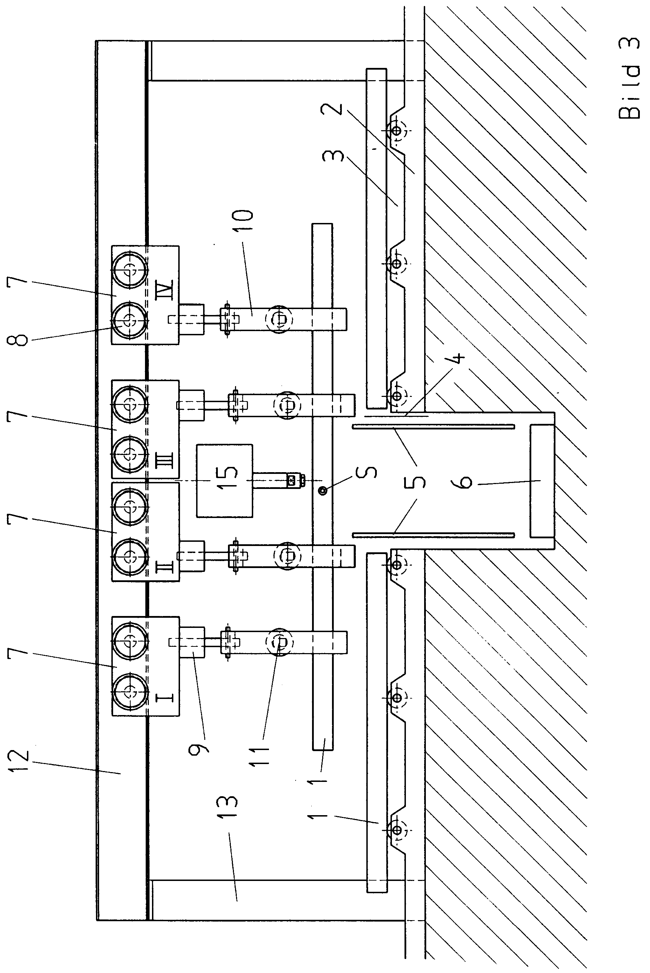

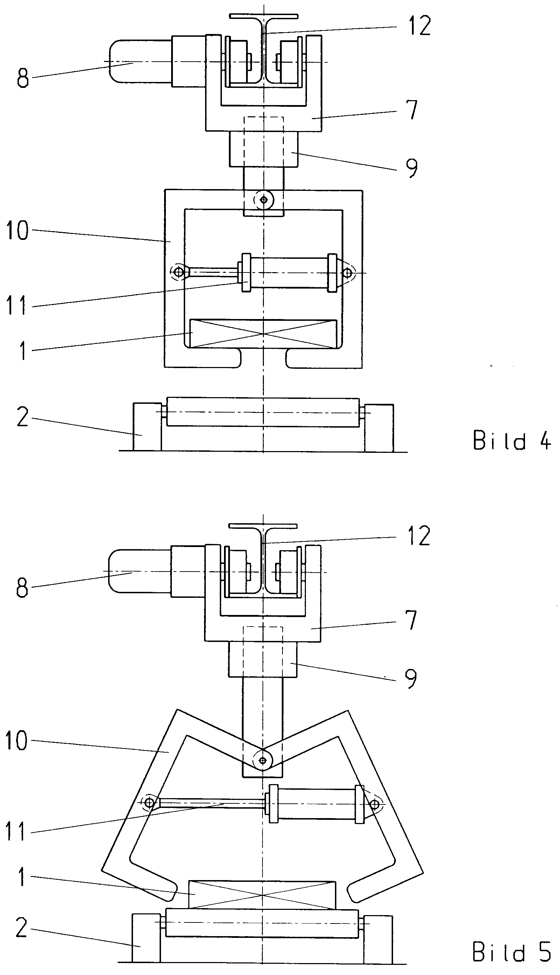

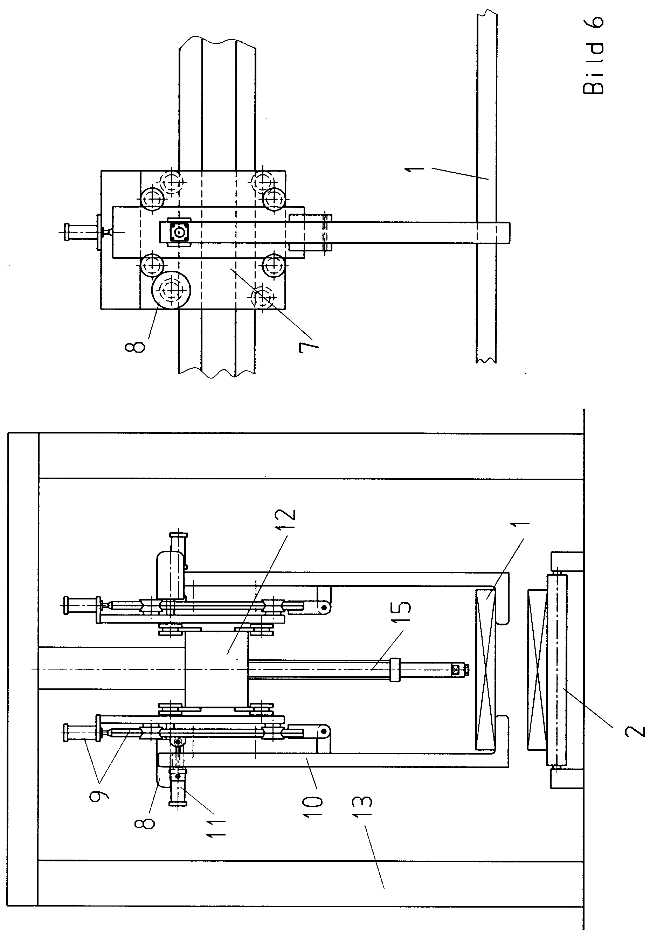

Wie erfindungsgemäß in **Bild 3** dargestellt, befinden sich mindestens 2 Hubschneidwagen (7) vor und mindestens 2 hinter der Längstrenneinrichtung (15), von links nach rechts mit I, II, III und IV gekennzeichnet.

Zuerst nehmen die Hubschneidwagen (7) I und II ein erstes Strangstück (1) zur Längstrenneinrichtung (15) hin auskragend, aber mit seinem Schwerpunkt sicher zwischen den Hubschneidwagen (7) I und II unterstützt, auf, tragen es zur Längstrenneinrichtung (15) und beginnen mit Anschneidgeschwindigkeit und dann mit Schneidgeschwindigkeit das Längsteilen des Strangstückes (1). Wenn es mit seinem vorderen, überkragenden Ende über den letzten der beiden direkt hinter der Längstrenneinrichtung (15) geparkten Hubschneidwagen (7) III und IV angekommen ist, hebt dieser letztere vorsichtig an und übernimmt synchron mitlaufend seine tragende Aufgabe. Daraufhin senkt der Hubschneidwagen (7) II ab, d.h. die Wagen 1 und 4 tragen das Strangstück (1) beim Schneiden. Dies ist die in **Bild 3** dargestellte Situation. Hat dann der Schwerpunkt des Strangstückes (1) den geparkten Hubschneidwagen (7) III passiert, dann hebt dieser an und übernimmt seinen tragenden synchronen Schneidlauf; der Hubschneidwagen (7) I senkt ab. Die Hubschneidwagen (7) I und II laufen nun über die Wartestellung des nächsten Strangstückes (1), um dieses aufzunehmen, während die Hubschneidwagen (7) III und IV die Schneidarbeiten fortsetzen, beenden, die Teilstücke des Strangstückes (1) auf dem fortgesetzten Rollgang (2) ablegen und wieder in ihre Parkstellung hinter der Längstrenneinrichtung (15) einnehmen.

Sollte die Länge der Strangstücke (1) und die Gefahr ihres Durchbiegens mehr als 2, also beispielsweise 3 Hubschneidwagen (7) pro Seite vor und hinter der Längstrenneinrichtung (15) erfordern, so läßt sich ein Übergeben des Strangstückes (1) auch von 3 Hubschneidwagen (7) Schritt für Schritt so organisieren, daß beim Schneiden einer Restlänge die ablaufseitigen Hubschneidwagen (7) dies ganze Strangstück (1) tragen und die zulaufseitigen Hubschneidwagen (7) genügend Zeit zum Aufnehmen einer neuen Bramme (1) haben.

Zum Schneiden kürzerer Brammen (1) können je 1 Hubschneidwagen (7) pro Seite über die Aufnahme- und Ablegepositionen hinaus in Wartestellung gefahren werden.

Wichtig ist nur, daß bei einem Betrieb mit 6 oder mehr Hubschneidwagen (7) ein Durchfahren der Hubschneidwagen (7) über die Längstrenneinrichtung (15) hinaus in jede Richtung möglich ist, die Übernahme, die Ablage, ein Zusammenfahren, ein Verstellen zueinander und ein Synchronfahren zu den richtigen Zeiten und Verhältnissen so geplant ist, daß der Schwerpunkt des Strangstückes (1) immer ausreichend unterstützt ist, ein Durchbiegen ausreichend klein gehalten und Zeitverluste zwischen dem Schneiden zweier Strangstücke (1) vermieden wird. Da eine entsprechend lange, dem Gewicht und der Länge des Strangstückes (1) angepaßte Laufbahn (12) statt mit zu großem, steifem und somit zu teurem Querschnitt nur durch auf den Laufbahnstützen (13) ruhenden Laufbahnträgern (14) hängend getragen werden kann, ist diese Ausführung mit zweiteiligen, synchron arbeitenden Hubschneidwagen(7)-Hälften für solche Bedarfsfälle einzusetzen.

### Legende

- 1: Strangstück = Bramme
- 2: Rollgang
- 3: Rahmenlücke
- 4: Rollgangslücke
- 5: Schutzwand
- 6: Schlackenkübel
- 7: Hubschneidwagen
- 8: Verfahrantrieb
- 9: Hubantrieb
- 10: Zange
- 11: Zangenantrieb
- 12: Laufbahn
- 13: Laufbahnstütze
- 14: Laufbahnträger
- 15: Längstrenneinrichtung

## Patentansprüche

1. Verfahren und Einrichtung zum Erzeugen von Mehrfachsträngen in einer Stahlstranggießanlage durch späteres Längsteilen eines breiten Stranges im Materialfluß nach einer Querteileinrichtung, dadurch gekennzeichnet, daß eine mechanische oder chemo-physikalische oder physikalisch wirkende Längstrenneinrichtung (15) für das Längsteilen so weit hinter einer Querteileinrichtung und Querentbartung zur Erzeugung von Strangstücken (1), also Brammen (1), angeordnet ist, daß nur einzelne Brammen (1), die nicht mehr mit dem Strang verbunden sind, von Hubschneidwagen (7) über einen Rollgang (2) oder sonstigem Auflager angehoben und durch die Längstrenneinrichtung (15) mit Trenngeschwindigkeit hindurch getragen und auf dem fortgesetzten Rollgang (2) wieder abgelegt werden.

2. Verfahren und Einrichtung zum Erzeugen von Mehrfachsträngen in einer Stahlstranggießanlage durch späteres Längsteilen eines breiten Stranges im Materialfluß nach einer Querteileinrichtung nach Anspruch 1, dadurch gekennzeichnet, daß die Hubschneidwagen (7) an einer parallel über einem Rollgang (2) angeordneten Laufbahn (12) über deren ganze Länge durchfahren können, und die Längstrenneinrichtung (15) unter der Laufbahn (12) etwa in der Mitte derselben innerhalb der Zangen (10) der Hubschneidwagen (7) angeordnet ist und mit Leitungen innerhalb der Laufbahn (12) versorgt und gesteuert wird.

3. Verfahren und Einrichtung zum Erzeugen von Mehrfachsträngen in einer Stahlstranggießanlage durch späteres Längsteilen eines breiten Stranges im Materialfluß nach einer Querteileinrichtung nach einem der Ansprüche 1 bis 2, dadurch gekennzeichnet, daß die Hubschneidwagen (7) jeweils in zwei eigenständige, aber synchron zusammenarbeitende, d.h. an einer gemeinsamen Laufbahn (12) verfahrende, hebende, senkende, schließende und öffnende Hubschneidwagen(7)-Hälften aufgeteilt sind, die über die ganze Länge der Laufbahn (12) verfahrbar sind.

4. Verfahren und Einrichtung zum Erzeugen von Mehrfachsträngen in einer Stahlstranggießanlage durch späteres Längsteilen eines breiten Stranges im Materialfluß nach einer Querteileinrichtung nach einem der Ansprüche 1 bis 3, dadurch gekennzeichnet, daß mehrere Hubschneidwagen (7) vor der Längstrenneinrichtung (15) eine Bramme (1) anheben, trennend durch die Längstrenneinrichtung (15) fahren, mit dem vorderen geschnittenen auskragenden Ende auf gleich schnell verfahrende Hubschneidwagen (7) hinter der Längstrenneinrichtung (15) übergeben und danach zum erneuten Anheben einer nachfolgenden Bramme (1) zurückfahren. Nach beendigtem Schneiden legen die nachgeordneten Hubschneidwagen (7) die längsgeteilte Bramme (1) ab und fahren wieder in Warte- bzw. Übernahmestellung hinter der Längstrenneinrichtung (15).

5. Verfahren und Einrichtung zum Erzeugen von Mehrfachsträngen in einer Stahlstranggießanlage durch späteres Langsteilen eines breiten Stranges im Materialfluß nach einer Querteileinrichtung nach einem der Ansprüche 1 bis 4, dadurch gekennzeichnet, daß die Hubschneidwagen (7) vor und hinter der Längstrenneinrichtung (15) an einer Laufbahn (12) über dem Rollgang (2) bis zur Längstrenneinrichtung (15) verfahren können, hydraulisch betätigte Zangen (10) zum Umgreifen der auf dem Rollgang (2) liegenden Brammen (1) und ein hydraulisches System zum Anheben oder Absenken derselben haben, sowie einen Verfahrantrieb (8), der für Eillauf, Schneidgeschwindigkeit und Anschneidgeschwindigkeit ausgeführt ist.

6. Verfahren und Einrichtung zum Erzeugen von Mehrfachsträngen in einer Stahlstranggießanlage durch späteres Längsteilen eines breiten Stranges im Materialfluß nach einer Querteileinrichtung nach einem der Ansprüche 1 bis 5, dadurch gekennzeichnet, daß die Rahmen der Rollgange (2) an der Länge der Brammen (1) und ihrer Schwerpunktlagen entsprechenden Stellen zum Umgreifen mit den Zangen (10) der Hubschneidwagen (7) bzw. zum Öffnen derselben unterbrochen sind.

7. Verfahren und Einrichtung zum Erzeugen von Mehrfachsträngen in einer Stahlstranggießanlage durch späteres Längsteilen eines breiten Stranges im Materialfluß nach einer Querteileinrichtung nach einem der Ansprüche 1 bis 6, dadurch gekennzeichnet, daß der Rollgang (2) vorn während des Längstrennens einer durch die Hubschneidwagen (7) angehobenen Bramme (1) den Einlauf eines Stranges oder einer Bramme (1) und die Ruhelage oder den Durchlauf erlaubt.

8. Verfahren und Einrichtung zum Erzeugen von Mehrfachsträngen in einer Stahlstranggießanlage durch späteres Längsteilen eines breiten Stranges im Materialfluß nach einer Querteileinrichtung nach einem der Ansprüche 1 bis 7, dadurch gekennzeichnet, daß die Längstrenneinrichtung (15) so hoch über einer Lücke des Rollgangs (2) angeordnet ist, daß nach dem Wegziehen von senkrechten Schutzwänden (5) und beim Einfahren einer waagerechten Wärmeschutzplatte zum Schutz der Längstrenneinrichtung (15) heiße Brammen auf dem Rollgang (2) durchgefördert werden können.
